Europäisches Patentamt

European Patent Office

Office européen des brevets

(11) Veröffentlichungsnummer: **0 321 689 B1**

(19)

# EUROPÄISCHE PATENTSCHRIFT

(12)

(45) Veröffentlichungstag der Patentschrift: **20.05.92**

(51) Int. Cl.⁵: **C21C 5/46**, C22B 9/05, G01K 1/08

(21) Anmeldenummer: **88118675.3**

(22) Anmeldetag: **10.11.88**

(54) **Vorrichtung als Temperaturmesser oder Spüllanze für Metallschmelzen od. dgl., insbesondere Aluminiumschmelzen.**

(30) Priorität: **21.12.87 DE 3743328**

(43) Veröffentlichungstag der Anmeldung:
**28.06.89 Patentblatt 89/26**

(45) Bekanntmachung des Hinweises auf die
Patenterteilung:
**20.05.92 Patentblatt 92/21**

(84) Benannte Vertragsstaaten:
**AT CH DE FR GB IT LI**

(56) Entgegenhaltungen:
**DE-A- 2 413 909**
**DE-A- 2 855 903**
**DE-A- 2 900 047**
**US-A- 3 680 382**

(73) Patentinhaber: **Honsel-Werke AG**
**Fritz-Honsel-Strasse**
**W-5778 Meschede(DE)**

(72) Erfinder: **Betz, Gerhard, Dr.-Ing.**
**Lindenbrink 31A**
**W-5778 Meschede(DE)**
Erfinder: **Heimes, Engelbert, Dr.-Ing.**
**Dahlienweg 2**
**W-5940 Lennestadt-Oedingen(DE)**

(74) Vertreter: **Rehders, Jochen, Dipl.-Ing.**
**Stresemannstrasse 28**
**W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung, die als Temperaturmesser oder als Spüllanze für Metallschmelzen, insbesondere Aluminiumschmelzen anwendbar ist und die die Merkmale des Gattungsbegriffes des Hauptanspruches aufweist. Als Temperaturmesser ist sie für andere Schmelzen wie Glasschmelzen geeignet.

Es stehen Temperaturmessrohre zum Messen und Regeln der Temperatur von Aluminiumschmelzen in Warmhalteöfen in Anwendung. Derartige Vorrichtungen weisen zwei Chromnickel-Thermoelementdrähte mit einem Durchmesser von ca. 2 mm auf und besitzen zum Schutz dieser Drähte vor dem aggressiv wirkenden Aluminium eine Ummantelung aus Grauguß oder Tongraphit. Diese bis zu 80 mm im Durchmesser dicke Ummantelung hat den Nachteil, daß Temperaturänderungen nur sehr langsam erkannt werden und demzufolge die Temperatur im Warmhalteofen nur mit einem großen Schwankungsbereich vom Sollwert regelbar ist. Darüber hinaus müssen diese grauguß- bzw. tongraphitummantelten Temperaturrohre ständig gewartet werden, da das Aluminium die Ummantelung zerstört.

Es sind ferner rohrförmige Keramiktemperaturmesser mit einem Außendurchmesser von 20 bis 30 mm in Gebrauch, die ein schnelles Ansprechverhalten aufweisen und die in einer Aluminiumschmelze fast unbegrenzt beständig sind. Der Nachteil dieser Keramiktemperaturrohre liegt in der großen Stoßempfindlichkeit, die sehr leicht zum Bruch der Vorrichtung führt.

Durch die DE-A-29 00 047 ist eine Sonde zur gleichzeitigen Ermittlung der Temperatur und Sauerstoffaktivität von Schmelzen bekannt, die aus einem Trägerröhrchen aus z. B. $Al_2O_3$ oder einem geeigneten Cermet besteht, der das Thermoelement aufnimmt. Dieses endet in einem Platindraht, der mit einer aus dem Trägerröhrchen ragenden mit einer Beschichtung z. B. aus $Cr/Cr_2O_3$ versehenen Kugel verbunden ist. Das Trägerröhrchen selbst kann ebenfalls eine Beschichtung tragen. - Eine Blaslanze zum Einbringen gasförmiger Stoffe in Schmelzbäder mit einer widerstandsfähigen gasgekühlten Ummantelung ist aus der DE-A-28 55 903 bekannt, wobei in dem oberen Abschnitt der Ummantelung ein starres Rohr für die Zuführung eines gasförmigen Mediums ragt und ein gleichfalls starres Tragrohr dieses Zuführungsrohr und die Ummantelung durchsetzen und letzlich ein Blasrohr durch das Tragrohr und den Mantelboden ragt.

Der Erfindung liegt die Aufgabe zugrunde, eine Vorrichtung für den genannten Zweck zu schaffen, die unter Berücksichtigung eines einfachen konstruktiven Aufbaus und einfacher Handhabung einerseits ein schnelles Ansprechen zeigt, deren Stoßempfindlichkeit andererseits aber stark gemindert ist und einen einfachen Konstruktionsaufbau zeigt.

Gegenüber dem Stand der Technik sieht die Erfindung die Merkmale des kennzeichnenden Teils des Hauptanspruches vor.

Die Merkmale der Unteransprüche dienen der Verbesserung und Weiterentwicklung der Merkmale des Hauptanspruches.

Bei Keramikrohren als Temperaturmesser oder als Spüllanze, wobei das Rohr einen Keramikmantel und einen von diesem aufgenommenen, nichtkeramischen Tragteil aufweist, tritt das Problem der unterschiedlichen Ausdehnungskoeffizienten der Materialien beider Teile auf. Dieser Sachverhalt wie auch das schnelle Ansprechen und die weitgehende Stoßunempfindlichkeit werden im Prinzip durch die Erfindung dadurch gelöst, daß der als Längskörper ausgebildete Tragteil nur stellenweise mit der Innenwand des Keramikmantels verbunden ist. Hierbei ist die Ausdehnungskraft des Tragteils in seiner axialen und in seiner radialen Richtung nich größer als die Festigkeit des Keramikmantels in diesen Richtungen. - Der Tragteil vermittelt hierbei dem Mantel die notwendige Festigkeit und Lagegenauigkeit, wie auch die Möglichkeit des federnden Ausweichens bei Stoßeinwirkung.

In der Zeichnung sind Ausführungsbeispiele der erfindungsgemäßen Vorrichtung als Temperaturmesser wie auch als Spüllanze dargestellt und zwar zeigen bzw. zeigt

die Fig. 1 - 3 verschiedene Ausführungsformen der Vorrichtung im Vertikalschnitt und

Fig. 4 das untere Ende der Vorrichtung nach Fig. 3, die als Spüllanze ausgebildet ist.

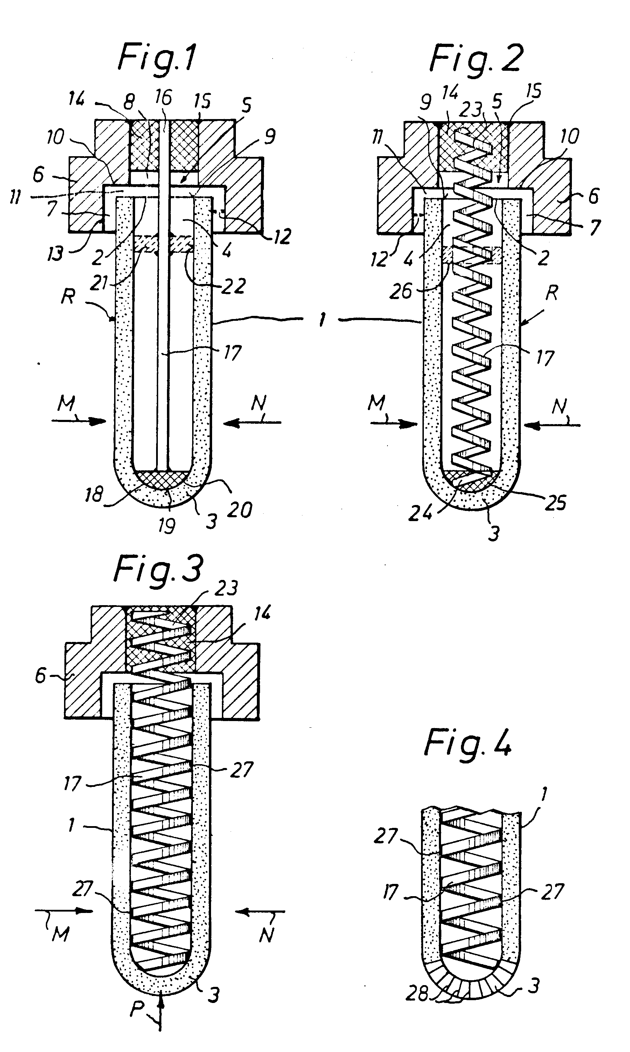

Bei der Ausführungsform nach Fig. 1 weist die erfindungsgemäße Vorrichtung R einen zylindrischen Mantel 1 auf, der an seinem oberen Ende bei 2 offen ist und einen konkav gewölbten Boden 3 aufweist. Der Mantel hat allseitig gleiche Stärke und besteht aus schmelzeresistenter Keramik.

Mit seinem oberen Ende 4 ragt der Mantel 1 in eine Ausnehmung 5 eines Aufnahmeteils 6, an dem der Mantel gehalten ist. Diese Ausnehmung weist einen unteren zylindrischen Abschnitt 7 sowie einen oberen, verjüngten Abschnitt 8 auf, wobei zwischen dem Stirnrand 9 des Mantels 1 und der Schulter 10 am Übergang zwischen den Abschnitten 7 und 8 ein Zwischenraum 11 belassen ist. Ein gleicher oder ähnlicher Zwischenraum 12 ist auf Höhe des Abschnitts 7 zwischen der Wand 13 des Teils 6 und der Außenwand des oberen Endes 4 des Mantels 1 vorgesehen. In dargestelltem Beispiel sind diese Zwischenräume 11, 12 zur Verdeutlichung vergrößert wiedergegeben.

Der obere zylindrische Abschnitt 8 des Aufnahmeteils 6 besitzt einen zylindrischen Einsatz 14, der bei 15 mit dem Aufnahmeteil 6 verbunden ist. Dieser Einsatz weist eine Mittelbohrung 16 auf, in der der als Längskörper ausgebildete Tragteil 17 des Mantels 1 mit seinem oberen Ende gehalten ist. Der stangenförmige Tragteil ist gering leicht federnd biegsam und an seinem unteren Ende mit einem konkav gewölbten Fußteil 18 verbunden, dessen Außenwand 19 der Innenwand des Bodens 3 angepaßt ist. Zwischen diesen beiden Wänden ist eine Klebstoffschicht 20 vorgesehen, die den Teil 18 mit dem Boden 3 und damit den Mantel 1 mit dem Tragteil 17 verbindet. - Die beim Aushärten des Klebstoffs aus diesem austretenden Gase können über die Zwischenräume 11, 12 entweichen.

Im oberen Abschnitt, gegebenenfalls auch im mittleren Abschnitt, des Mantels 1 trägt der Tragteil 17 eine oder mehrere Scheiben 21, die mit einigen Längsbohrungen versehen und verschieblich auf dem Tragteil angeordnet ist bzw. sind. Die Scheibe oder Scheiben liegen mit ihrem Rand 22 an der Innenwand des Mantels 1 an. - Der Tragteil 17 kann sich unabhängig von der Längendehnung des Mantels 1 bei Erwärmung der Teile ausdehnen.

Statt des in Fig. 1 wiedergegebenen Fußteils 18 kann der Boden 3 des Mantels 1 mit einer Klebstoffüllung versehen werden, in die das Ende des Teils 17 hineinragt, wobei zur besseren Verbindung des zylindrischen Endes des Tragteils 17 mit der Klebstoffmasse dieses Ende Perforierungen, Ansätze od. dgl. besitzen kann, so daß auch der Boden 3 des Mantels 1 in seiner Ausdehnung unabhängig von der Ausdehnung des Fußes des Tragteils 17 ist.

Bei der Ausführungsform nach Fig. 2 weist der Mantel 1 wieder dieselbe Konfiguration wie der Mantel nach Fig. 1 auf. Auch ist wiederum der Einsatz 14 in dem Aufnahmeteil 6 vorgesehen. - Der Tragteil 17 wird bei dieser Ausführungsform durch eine Spirale gebildet, deren oberes Ende 23 in dem Einsatz 14 eingelassen ist und die vorzugsweise aus Flachstahl gebildet ist. Das untere Ende 24 der Spirale, deren Außendurchmesser geringer ist als der Innendurchmesser des Mantels 1, ist in einer ebenfalls aushärtbaren Klebstoffmasse 25 verankert. Auch bei diesem Ausführungsbeispiel können im mittleren und oberen Abschnitt des Mantels 1 eine oder mehrere Scheiben 26 vorgesehen werden, die gleichfalls wiederum an der Innenwand des Mantels 1 fest anliegen, den Mantel 1 radial abstützen. Hier können die Scheibe oder die Scheiben 26 mit der Spirale fest verbunden sein.

Um bei einer Stoßeinwirkung in Richtung der Pfeile M und N in Fig. 1 und 2 ausweichen zu können, ist der Mantel 1, wie vordem beschrieben, mit seinem oberen Ende mit Abstand zu dem Teil 6 gehalten. Auch ist der Tragteil 17 in der Lage, ohne zu brechen oder ohne eine nennenswerte Verletzung des Mantels 1 zu bewirken, bei Stoßeinwirkung seitlich auszuweichen.

Eine besonders vorteilhafte Ausführungsform zeigt Fig. 3. Bei ihr ist wiederum der Mantel 1 mit seinem Boden 3 vorgesehen; auch durchsetzt ebenfalls eine Spirale als Tragteil 17 das Mantelrohr 1, wobei die Spirale aus Flachmaterial hergestellt ist. Auch ist das obere Ende 23 der Spirale in dem Einsatz 14 gehalten. Bei dem Ausführungsbeispiel nach Fig. 3 liegt aber die Außenseite der Windungen der Spirale an der Innenwand des Mantels 1 an, wobei die Außenseite der Spiralwindungen mit dieser Innenwand durch einen aushärtbaren, wärmeresistenten Klebstoff 27 verbunden ist. Hierdurch wird eine Aussteifung des Mantels 1 einerseits erreicht, andererseits die Vorrichtung gegen radiale Stoßeinwirkung (in Richtung der Pfeile M und N z. B.) bewahrt. Die Dehnungskraft der Spirale 17 bei dem Ausführungsbeispiel nach Fig. 3 ist gleich oder geringer als die Festigkeit des Mantels 1, so daß der größere Ausdehnungskoeffizient der metallischen Spirale gegenüber dem Ausdehnungskoeffizienten des keramischen Mantels den Mantel 1 nicht sprengt. Auch bei einer axialen Stoßbeanspruchung des Mantels 1 in Richtung des Pfeiles P sorgt die mit der Innenwand des Mantels 1 verbundene Spirale für die notwendige Festigkeit des Rohres.

Bei der Ausführungsform nach Fig. 4 weist die als Spüllanze für Metallschmelzen dienende Vorrichtung wiederum den Mantel und die Spirale nach Fig. 3 auf, wobei der Boden 3 des Keramikmantels feine radiale Blaskanäle 28 besitzt. Hier ist der Boden 3 frei von einem Klebstoff, da die Verbindung des Tragteils 17 mit dem Mantel 1 durch die Verklebung der Spiralwindungen mit der Mantelinnenwand sichergestellt ist.

Die Thermoelementdrähte nach der Ausführungsform der Vorrichtung als Temperaturmesser sind in den Fig. 1 bis 3 im einzelnen nicht dargestellt. Sie sind ebenso wie die Zuführung der Blasluft oder -gases in bekannter Weise ausgebildet und angeordnet.

**Patentansprüche**

1. Vorrichtung zum Eintauchen in eine Metall- oder Glasschmelze, z.B. zum Temperaturmessen oder Spülen einer Aluminiumschmelze, mit einem Keramikmantel (1) und einem in diesen ragenden, nichtkeramischen Tragteil (17), mit dem der Mantel verbunden ist, wobei der Keramikmantel und der Tragteil unterschiedliche Ausdehnungskoeffizienten haben, dadurch gekennzeichnet, daß der Tragteil (17) als leicht biegsame Stange oder spiralförmig ausgebildet ist und nur stellenweise mit der Innenwand des Keramikmantels (1) verbunden ist.

2. Vorrichtung nach Anspruch 1, dadurch gekennzeichnet, daß der Tragteil (17) den Mantelinnenraum nur teilweise ausfüllt.

3. Vorrichtung nach Anspruch 1 und 2, dadurch gekennzeichnet, daß der Tragteil (17) sich über die Länge des Keramikmantels (1) erstreckt.

4. Vorrichtung nach Anspruch 1 und einem der Ansprüche 2 oder 3, dadurch gekennzeichnet, daß der Tragteil (17) mit einer mit dem Boden (3) des Mantels (1) verbundenen Platte oder Schale (Fußteil 18) versehen ist.

5. Vorrichtung nach Anspruch 1 und einem der Ansprüche 2 bis 4, dadurch gekennzeichnet, daß der Tragteil (17) durch eine oder mehrere Scheiben (21) in dem Mantel (1) gehalten ist.

6. Vorrichtung nach Anspruch 5, dadurch gekennzeichnet, daß die Scheiben (21) auf dem stangenförmigen Tragteil (17) oder in dem Mantel (1) verschieblich angeordnet sind.

7. Vorrichtung nach Anspruch 1, dadurch gekennzeichnet, daß der spiralförmige Teil (17) aus Flachdraht besteht und die Außenseite der Spiralwindungen mit der Innenwand des Mantels (1) verklebt ist.

8. Vorrichtung nach Anspruch 1 und einem der Ansprüche 2 bis 7, dadurch gekennzeichnet, daß der Tragteil (17) mit seinem oberen Ende in einem Aufnahmeteil (6) gehalten ist und das obere Ende des Mantels (1) mit den diesem Ende benachbarten Teilen des Aufnahmeteils (6) einen Zwischenraum (11, 12) bildet.

9. Vorrichtung nach Anspruch 1 und einem oder mehreren der Ansprüche 2 bis 8 als Spüllanze mit Austrittsöffnung im Mantelboden, dadurch gekennzeichnet, daß der Tragteil (17) eine Spirale ist und der Mantelboden (3) klebemittelfrei ist.

## Claims

1. Device for dipping into molten metal or molten glass, for example for temperature measuring or the rinsing of molten aluminium, having a ceramic casing (1) and a non-ceramic carrying part (17) projecting therein, with which carrying part (17) the casing is connected, the ceramic casing and the carrying part having different coefficients of expansion, characterized in that the carrying part (17) is constructed as an easily bendable rod or helically and is only connected to the inner wall of the ceramic casing (1) in places.

2. Device according to claim 1, characterized in that the carrying part (17) only partially fills the interior of the casing.

3. Device according to claim 1 and 2, characterized in that the carrying part (17) extends over the length of the ceramic casing (1).

4. Device according to claim 1 and one of claims 2 or 3, characterized in that the carrying part (17) is provided with a plate or dish (base part 18) connected to the bottom (3) of the casing (1).

5. Device according to claim 1 and one of claims 2 to 4, characterized in that the carrying part (17) is held by one or several discs (21) in the casing (1).

6. Device according to claim 5, characterized in that the discs (21) are arranged in a displaceable manner on the rod-shaped carrying part (17) or in the casing (1).

7. Device according to claim 1, characterized in that the helical part (17) consists of flat wire and the outer side of the helical windings is glued to the inner wall of the casing (1).

8. Device according to claim 1 and one of claims 2 to 7, characterized in that the carrying part (17) is held with its upper end in a receiving part (6) and the upper end of the casing (1) forms an intermediate space (11, 12) with the parts of the receiving part (6) which are adjacent to this end.

9. Device according to claim 1 and one or several of claims 2 to 8 constructed as a rinsing lance with an outlet opening in the casing bottom, characterized in that the carrying part (17) is a helix and the casing bottom (3) is free of adhesive.

## Revendications

1. Dispositif destiné à être plongé dans un bain en fusion de métal ou de verre, par exemple pour la mesure de la température ou la purification d'un bain d'aluminium, comprenant une enveloppe (1) en céramique et un élément porteur (17), qui n'est pas en céramique, s'enfonçant dans l'enveloppe et relié à celle-ci, l'enveloppe en céramique et l'élément porteur possédant des coefficients de dilatation différents, caractérisé en ce que l'élément porteur (17) est constitué sous forme d'une tige facilement flexible ou en spirale et n'est reliée à la paroi interne de l'enveloppe en céramique (1) que par emplacements.

2. Dispositif selon la revendication 1, caractérisé en ce que l'élément porteur (17) remplit seulement partiellement l'espace intérieur de l'enveloppe.

3. Dispositif selon les revendications 1 et 2, caractérisé en ce que l'élément porteur (17) s'étend sur toute la longueur de l'enveloppe en céramique (1).

4. Dispositif selon la revendication 1 et l'une des revendications 2 ou 3, caractérisé en ce que l'élément porteur (17) est muni d'une plaque ou coquille (partie de pied 18) qui est reliée au fond (3) de l'enveloppe (1).

5. Dispositif selon la revendication 1 et l'une des revendications 2 à 4, caractérisé en ce que l'élément porteur (17) est maintenu dans l'enveloppe (1) par un ou plusieurs disques (21).

6. Dispositif selon la revendication 5, caractérisé en ce que les disques (21) sont montés de façon mobile sur l'élément porteur en forme de tige (17) ou dans l'enveloppe (1).

7. Dispositif selon la revendication 1, caractérisé en ce que l'élément porteur en forme de spirale (17) est constitué par un fil métallique plat et le côté extérieur des spires de la spirale est collé à la paroi interne de l'enveloppe (1).

8. Dispositif selon la revendication 1 et l'une des revendications 2 à 7, caractérisé en ce que l'élément porteur (17) est maintenu par son extrémité supérieure dans un élément de réception (6) et en ce que l'extrémité supérieure de l'enveloppe (1) forme un espace intermédiaire (11, 12) avec les parties de l'élément de réception (6) qui sont voisines de cette extrémité.

9. Dispositif selon la revendication 1 et l'une ou plusieurs des revendications 2 à 8, constitué sous forme d'une lance de purification avec des ouvertures de sortie dans le fond de son enveloppe, caractérisé en ce que l'élément porteur (17) est constitué par une spirale et le fond (3) de l'enveloppe est exempt d'adhésif.

Fig.1

Fig.2

Fig.3

Fig.4